# EUROPEAN PATENT APPLICATION

(11) **EP 3 557 748 A1**
(43) Date of publication of application: **23.10.2019**
(21) Application number: 19168859.7
(22) Date of filing: 12.04.2019
(51) Int. Cl.: H02M 7/06, H02H 7/125, G01R 31/40

(54) **FAULT TOLERANT AC RECTIFICATION**

(30) Priority: 19.04.2018 US 201815957014
(71) Applicant: Hamilton Sundstrand Corporation, Charlotte, NC 28217-4578 (US)
(72) Inventor: FOX, Brennan, Geneseo, IL Illinois 61254 (US)
(74) Representative: Dehns

(57) **Abstract**

A rectifier includes a first input (17A), a first output (19A), and a first pair of diodes (22A,24A). The first input is configured to receive a first alternating current (AC) voltage. The first pair of diodes is electrically coupled in series between the first input and the first output. The first pair of diodes is configured to rectify the first AC voltage. The first output is configured to output the first rectified AC voltage.

## Description

### BACKGROUND

Fault tolerant systems are desirable in many applications such as in aircraft. Current limiting resistors are generally added to alternating current AC inputs of rectifiers to protect against a shorted diode. Using current limiting resistors causes distortion on the rectified output. The distortion caused by the current limiting resistors can be undesirable in some applications.

### SUMMARY

In one example, a rectifier comprises a first input, a first output, and a first pair of diodes. The first input is configured to receive a first alternating current (AC) voltage. The first pair of diodes is electrically coupled in series between the first input and the first output. The first pair of diodes is configured to rectify the first AC voltage. The first output is configured to output the first rectified AC voltage.

In one example, a system comprises a first alternating current (AC) voltage source a rectifier. The first AC voltage source is configured to provide a first AC voltage. The rectifier comprises a first input, a first output, and a first pair of diodes. The first input is configured to receive the first AC voltage. The first pair of diodes is electrically coupled in series between the first input and the first output. The first pair of diodes is configured to rectify the first AC voltage. The first output is configured to output the first rectified AC voltage.

### BRIEF DESCRIPTION OF THE DRAWINGS

FIG. 1 is a schematic diagram of a prior art alternating current (AC) rectification system including a current limiting AC rectifier.
FIG. 2 is a schematic diagram of an example of an AC rectification system including a fault tolerant rectifier.
FIG. 3 is a graph depicting the outputs of a current limiting AC rectifier and a fault tolerant AC rectifier.

### DETAILED DESCRIPTION

Apparatus, systems, and associated methods relate to AC rectifiers. Using the apparatus, systems, and associated methods herein, allows for fault tolerant AC rectification without the using current limiting resistors. Additionally, this allows for a more ideal output signal for sensitive electronics and/or sensors.

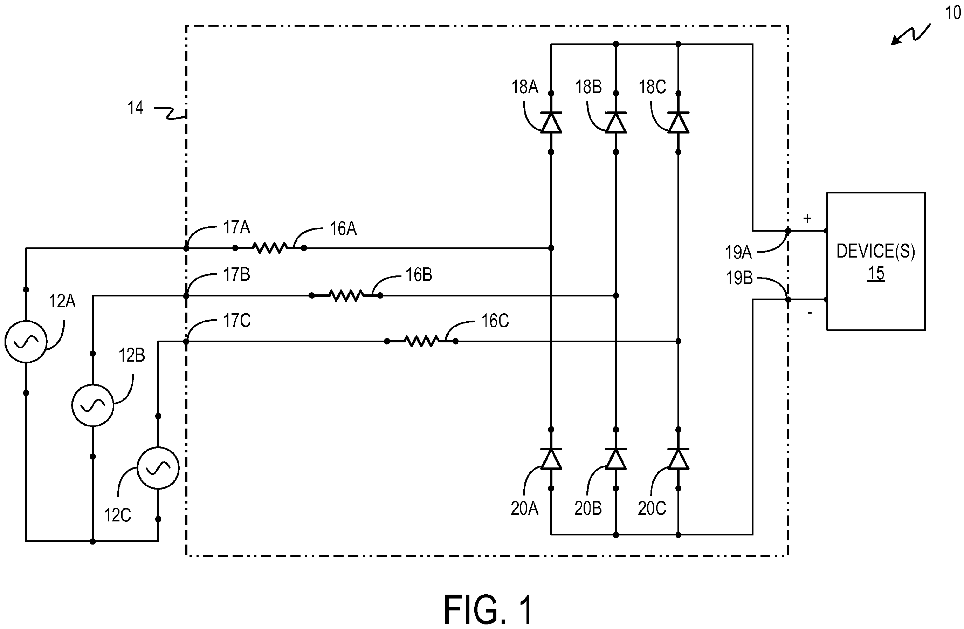

FIG. 1 is a schematic diagram of prior art AC rectification system 10 including AC voltage sources 12A-12C, current limiting rectifier 14, and device(s) 15. Current limiting rectifier 14 includes current limiting resistors 16A-16C, inputs 17A-17C, diodes 18A-18C, outputs 19A and 19B, and diodes 20A-20C.

AC voltage sources 12A-12C each provide an AC voltage. In one example, AC voltage sources 12A-12C each provide an AC voltage at a different phase. AC voltage sources 12A-12C are electrically coupled to inputs 17A-17C. Diodes 18A-18C and 20A-20C rectify the AC voltages provided by AC voltage sources 12A-12C. Diodes 18A-18C are electrically coupled to output 19A. Diodes 18A-18C each provide a rectified voltage to output 19A. Output 19A is configured to receive each of the rectified voltages. Diodes 20A-20C are electrically coupled to output 19B. Diodes 20A-20C each provide a rectified voltage to output 19B. Output 19B is configured to receive each of the rectified voltages. Current limiting resistors 16A-16C are configured to limit the current in the event that any of diodes 18A-18C and 20A-20C become shorted. Current limiting resistors 16A-16C prevent damage that could occur as a result of a diode short, but they do not allow current limiting rectifier 14 to continue to function properly if one of diodes 18A-18C and 20A-20C becomes shorted. When a diode becomes shorted, it can no longer rectify an AC voltage.

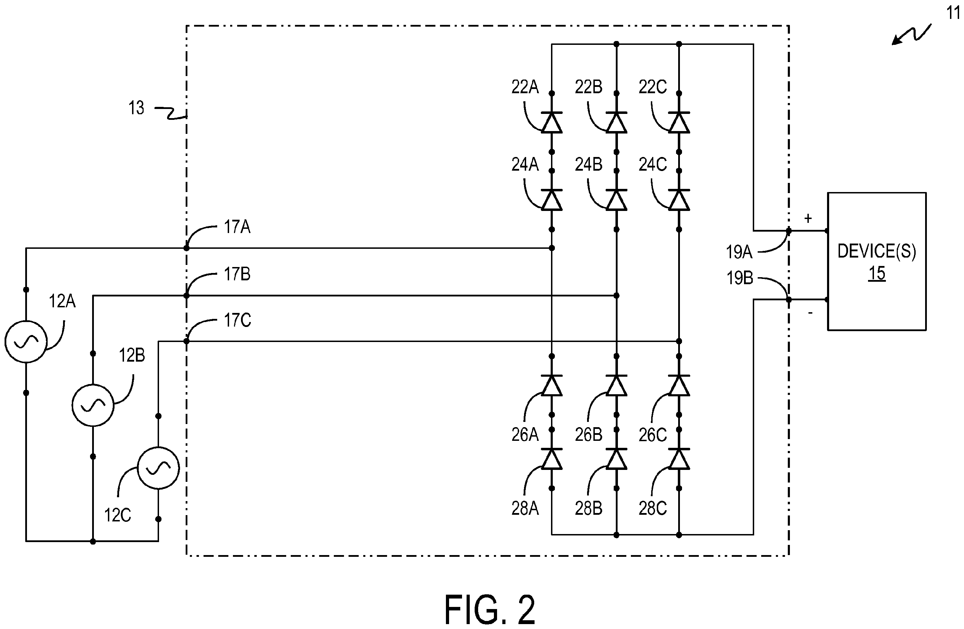

FIG. 2 is a schematic diagram of AC rectification system 11 including AC voltage sources 12A-12C, fault tolerant rectifier 13, and device(s) 15. Fault tolerant rectifier includes inputs 17A-17C; outputs 19A and 19B; and diodes 22A-22C, 24A-24C, 26A-26C, and 28A-28C.

Diodes 22A-22C, 24A-24C, 26A-26C, and 28A-28C are arranged in series connected pairs. Diodes 22A-22C and 24A-24C are paired and provide fault tolerant rectification of AC voltages from inputs 17A-17C to output 19A. Diodes 26A-26C and 28A-28C are paired and provide fault tolerant rectification of AC voltages from inputs 17A-17C to output 19B. If any one diode, in a pair of diodes, is shorted or damaged the remaining undamaged diode of the pair of diodes continues to function and provide rectification the corresponding AC voltage. The remaining undamaged diode also limits the current, thus circumventing the need for current limiting resistors as used in current limiting rectifier 14 of FIG. 1.

The voltage between outputs 19A and 19B is a rectified voltage that is provided to device(s) 15. Device(s) 15 can be a load device and/or a sensor. In one example, device(s) 15 is an AC short detection sensor. The output provided by fault tolerant rectifier 13 is a rectified combination of the AC voltages provided by AC voltage sources 12A-12C. When there are no shorts on any electrical branches connected to any of AC voltage sources 12A-12C, the frequency of the output provided by fault tolerant rectifier 13 is six times the frequency of any individual AC voltage provided by any of AC voltage sources 12A-12C. If one of the electrical branches has a short, the frequency of the output provided by fault tolerant rectifier 13 drops to two times the frequency of any individual AC voltage provided by any of AC voltage sources 12A-12C. If two electrical branches have a short, the frequency of the output provided by fault tolerant rectifier 13 drops to the frequency of the electrical branch that does not have an electrical short. AC short detection sensors use a bandpass filter to determine if shorting of an electrical branch has occurred. If the frequency of the rectified signal falls outside of the passband of the bandpass filter, the AC short detection sensor determines that a short of at least one electrical branch has occurred.

As shown, AC rectification system 11 includes three voltage sources and a single rectifier for rectifying the AC voltages. In one embodiment, AC rectification system 11 comprises a single AC voltage source and a single fault tolerant rectifier for rectifying the AC voltage of the single AC voltage source. In another embodiment, AC rectification system 11 comprises a plurality of AC voltage sources and a plurality of fault tolerant rectifiers for rectifying each of a plurality of AC voltages.

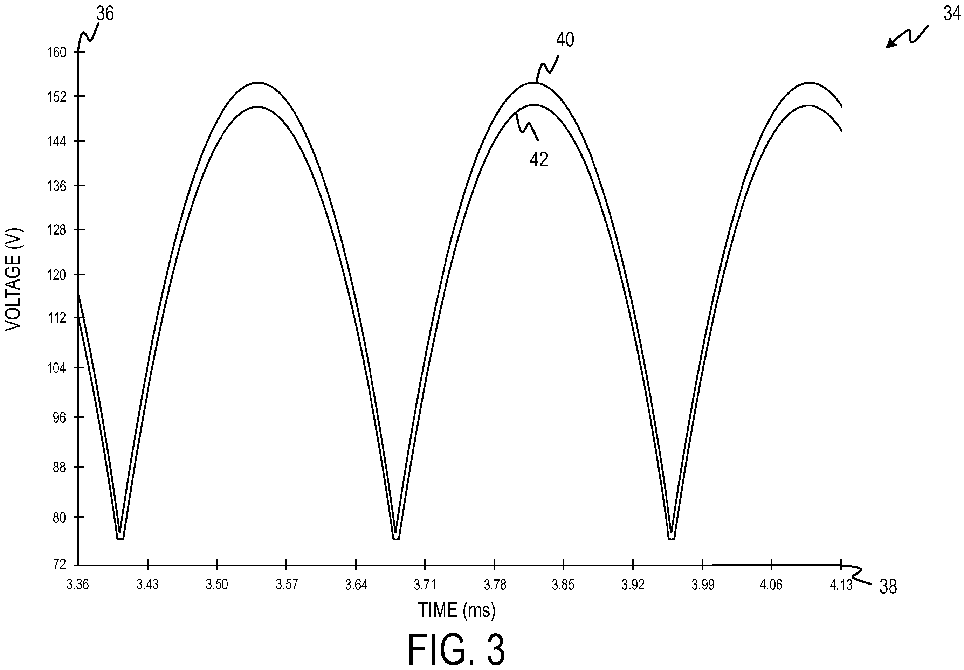

FIG. 3 is graph 34 including y-axis 36, x-axis 38, fault tolerant sinewave 40, and current limiting sinewave 42. For purposes of clarity and ease of discussion, graph 34 is discussed with respect to current limiting rectifier 14 of FIG. 1 and fault tolerant rectifier 13 of FIG. 2.

Graph 34 plots voltage in volts on y-axis 36 and time in milliseconds on x-axis 38. Fault tolerant sinewave 40 represents the output of fault tolerant rectifier 13 (FIG. 2). Current limiting sinewave 42 represents the output of current limiting rectifier 14 (FIG. 1). As shown, the voltage output by current limiting rectifier 14 is less than the voltage output of fault tolerant rectifier 13. Current limiting resistors 16A-16C (FIG. 1) cause power dissipation and a corresponding voltage drop. Fault tolerant rectifier 13 does not include any current limiting resistors, and therefore does not incur the same power dissipation and voltage drop of current limiting rectifier 14. Current limiting resistors 16A-16C also cause distortion in the rectified AC signals. As shown, sinewave 42 flattens out at the low point of every period. The flattened-out portion of sinewave 42 represents the distortion caused by current limiting resistors 16A-16C. Rectified AC signals include harmonics which distortion can make difficult to predict. The distortion can shift the frequency of sinewave 42 perceived by device(s) 15. In one example, device(s) 15 is an AC short detection sensor and the perceived frequency shift can move the frequency outside of the passband of the AC short detection sensor, causing false positive fault detection. As shown, sinewave 40 does not have a flattened out section because there are no current limiting resistors in fault tolerant rectifier 13 to cause distortion. Therefore, fault tolerant rectifier 13 does not cause the false positive fault detection that can be caused by current limiting rectifier 14.

Accordingly, implementing techniques of this disclosure, fault tolerant rectifiers can be used to provide a more ideal output signal for sensitive electronics and/or sensors. Using fault tolerant rectifiers as described herein, provides an output signal without distortion caused by current limiting resistors. Additionally, fault tolerant rectifiers dissipate less power, making fault tolerant rectifiers more efficient. This lowers the likelihood of false positive short detection and provides a better signal to sensitive electronics and/or sensors.

### Discussion of Possible Embodiments

The following are non-exclusive descriptions of possible embodiments of the present invention.

A rectifier can comprise a first input configured to receive a first alternating current (AC) voltage; a first output; and a first pair of diodes electrically coupled in series between the first input and the first output, the first pair of diodes configured to rectify the first AC voltage, and wherein the first output is configured to output the first rectified AC voltage.

The rectifier of the preceding paragraph can optionally include, additionally and/or alternatively, any one or more of the following features, configurations and/or additional components:

A second input can be configured to receive a second AC voltage; and a second pair of diodes can be electrically coupled in series between the second input and the first output, the second pair of diodes can be configured to rectify the second AC voltage, and wherein the first output can be configured to output the first and second rectified AC voltage.

A third input can be configured to receive a third AC voltage; and a third pair of diodes can be electrically coupled in series between the third input and the first output, the third pair of diodes can be configured to rectify the third AC voltage, and wherein the first output can be further configured to output the first, second, and third rectified AC voltage.

A second output; and a fourth pair of diodes can be electrically coupled in series between the first input and the second output; and a fifth pair of diodes can be electrically coupled in series between the second input and the second output; and a sixth pair of diodes electrically coupled in series between the third input and the second output.

The rectifier may not include a resistor electrically coupled between the first input and the first pair of diodes.

An AC rectification system can comprise a plurality of AC voltage sources configured to provide a plurality of AC voltages; and a plurality of rectifiers of any of the preceding paragrpahs configured to rectify the plurality of AC voltages provided by the plurality of AC voltage sources.

The AC rectification system of the preceding paragraph can optionally include, additionally and/or alternatively, any one or more of the following features, configurations and/or additional components:

At least one of the plurality of rectifiers can be a full wave rectifier.

At least one of the plurality of rectifiers can be configured to rectify two or more AC voltages of the plurality of AC voltages provided by the plurality of AC voltage sources.

A rectifier of any of the preceding paragraphs, the rectifier can be configured to provide full wave rectification to at least three AC voltages provided by the plurality of AC voltage sources.

A system can comprise a first alternating current (AC) voltage source configured to provide a first AC voltage; a rectifier can comprise a first input configured to receive a first alternating current (AC) voltage; a first output; and a first pair of diodes electrically coupled in series between the first input and the first output, the first pair of diodes configured to rectify the first AC voltage, and wherein the first output is configured to output the first rectified AC voltage.

A second AC voltage source can be configured to provide a second AC voltage, and wherein the rectifier can further comprise a second input can be configured to receive a second AC voltage; and a second pair of diodes can be electrically coupled in series between the second input and the first output, the second pair of diodes can be configured to rectify the second AC voltage, and wherein the first output can be configured to output the first and second rectified AC voltage.

A third AC voltage source can be configured to provide a third AC voltage.

A third input can be configured to receive the third AC voltage; and a third pair of diodes can be electrically coupled in series between the third input and the first output, the third pair of diodes can be configured to rectify the third AC voltage, and wherein the first output can be further configured to output the third rectified AC voltage.

A second output; and a fourth pair of diodes can be electrically coupled in series between the first input and the second output; and a fifth pair of diodes can be electrically coupled in series between the second input and the second output; and a sixth pair of diodes can be electrically coupled in series between the third input and the second output.

The rectifier may not include a resistor electrically coupled between the first input and the first pair of diodes.

A sensor can be electrically coupled to the first output.

The sensor can be configured to detect a short of the first and/or second AC voltage sources.

The system can be a system of an aircraft.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A rectifier comprising:
a first input (17A) configured to receive a first alternating current (AC) voltage;
a first output (19A); and
a first pair of diodes (22A,24A) electrically coupled in series between the first input and the first output, the first pair of diodes configured to rectify the first AC voltage, and
wherein the first output is configured to output the first rectified AC voltage.

2. The rectifier of claim 1, further comprising:
a second input (17B) configured to receive a second AC voltage; and
a second pair of diodes (22B,24C) electrically coupled in series between the second input and the first output, the second pair of diodes configured to rectify the second AC voltage, and
wherein the first output is configured to output the first and second rectified AC voltage.

3. The rectifier of claim 2, further comprising:
a third input (17C) configured to receive a third AC voltage; and
a third pair of diodes (22C,24C) electrically coupled in series between the third input and the first output, the third pair of diodes configured to rectify the third AC voltage, and
wherein the first output is further configured to output the first, second, and third rectified AC voltage.

4. The rectifier of claim 3, further comprising:
a second output (19B); and
a fourth pair of diodes (26A,28A) electrically coupled in series between the first input and the second output; and
a fifth pair of diodes (26B,28B) electrically coupled in series between the second input and the second output; and
a sixth pair of diodes (26C,28C) electrically coupled in series between the third input and the second output.

5. The rectifier of any preceding claim, wherein the rectifier does not include a resistor electrically coupled between the first input and the first pair of diodes.

6. An AC rectification system comprising:
a plurality of AC voltage sources (12A-12C) configured to provide a plurality of AC voltages; and
a plurality of rectifiers of any preceding claim configured to rectify the plurality of AC voltages provided by the plurality of AC voltage sources.

7. The AC rectification system of claim 6, wherein at least one of the plurality of rectifiers is a full wave rectifier.

8. The AC rectification system of claim 6, wherein at least one of the plurality of rectifiers is configured to rectify two or more AC voltages of the plurality of AC voltages provided by the plurality of AC voltage sources.

9. The AC rectification system of claim 6, further comprising a rectifier of claim 4, the rectifier configured to provide full wave rectification to at least three AC voltages provided by the plurality of AC voltage sources.

10. A system comprising:
a first alternating current (AC) voltage source configured to provide a first AC voltage;
a rectifier as claimed in any preceding claim.

11. The system of claim 10 when dependent on claim 2 or any claim dependent thereon, further comprising a second AC voltage.

12. The system of claim 10 when dependent on claim 3 or any claim dependent thereon, further comprising a third AC voltage source configured to provide a third AC voltage.

13. The system of any of claims 10 to 12, further comprising a sensor electrically coupled to the first output.

14. The system of claim 13, wherein the sensor is configured to detect a short of the first and/or second AC voltage sources.

15. The system of any of claims 10 to 14, wherein the system is a system of an aircraft.
